Europäisches Patentamt

European Patent Office

Office européen des brevets

(11) Veröffentlichungsnummer: **0 192 966**
B1

(12) **EUROPÄISCHE PATENTSCHRIFT**

(45) Veröffentlichungstag der Patentschrift:
15.11.89

(51) Int. Cl.⁴: **H04L 11/00, H04L 11/10**

(21) Anmeldenummer: 86100921.5

(22) Anmeldetag: 23.01.86

(54) Verfahren zum Übertragen von Datensignalen zwischen Teilnehmerstellen einer Datenvermittlungsanlage.

(30) Priorität: 20.02.85 DE 3505867

(43) Veröffentlichungstag der Anmeldung:
03.09.86 Patentblatt 86/36

(45) Bekanntmachung des Hinweises auf die Patenterteilung:
15.11.89 Patentblatt 89/46

(84) Benannte Vertragsstaaten:
AT DE IT NL

(56) Entgegenhaltungen:
EP-A- 0 088 310
EP-A- 0 144 583
DE-A- 3 431 762

(73) Patentinhaber: **Siemens Aktiengesellschaft,
Wittelsbacherplatz 2, D-8000 München 2(DE)**

(72) Erfinder: **Franz, Dietmar, Dipl.-Ing. (FH),
Edelweissstrasse 66, D-8039 Puchheim(DE)**

## Beschreibung

Die Erfindung betrifft ein Verfahren zum Übertragen von Datensignalen zwischen Teilnehmerstellen einer Datenvermittlungsanlage, die über eine an der Datenvermittlungsanlage angeschlossene Signalbehandlungseinrichtung dadurch Datensignale austauschen, daß nach der Belegung eines Übertragungskanals der Signalbehandlungseinrichtung durch die Datenvermittlungsanlage während einer zwischen einer der Teilnehmerstellen und der Signalbehandlungseinrichtung aufgebauten ersten Verbindung die zu behandelnden Datensignale in die Signalbehandlungseinrichtung eingespeichert werden und daß anschließend die eingespeicherten Datensignale nach einer entsprechenden Behandlung im Zuge einer zweiten Verbindung über die Datenvermittlungsanlage an eine weitere Teilnehmerstelle weitergeleitet werden, wobei die Dauer des Bestehens der ersten Verbindung in der Datenvermittlungsanlage, die Dauer des Bestehens der zweiten Verbindung dagegen in der Signalbehandlungseinrichtung ermittelt wird und nach dem Abbau der zweiten Verbindung von der Signalbehandlungseinrichtung her Angaben bezüglich der Dauer des Bestehens der zweiten Verbindung zu der Datenvermittlungsanlage hin übertragen werden, in welcher aus diesen Angaben und den dort bereits vorliegenden Angaben eine Gesamtverbindungsdauer ermittelt wird, und wobei der Übertragungskanal auf ein von der Signalbehandlungseinrichtung abgegebenes Freimeldesignal hin von der Datenvermittlungsanlage für eine erneute Belegung wieder freigegeben wird.

In öffentlichen Vermittlungsnetzen ist es allgemein üblich, für die über Vermittlungsanlagen verlaufenden 4 Wählverbindungen Gebühren zu erheben. Diese Gebühren richten sich in der Regel nach der Dauer des Bestehens der über die Vermittlungsanlagen verlaufenden Verbindungen. Die zeitliche Erfassung erfolgt dabei zumeist in den Vermittlungsanlagen selbst. Dies ist ohne weiteres möglich, wenn Datensignale jeweils zwischen Teilnehmerstellen im Zuge einer einzigen durchgehenden Verbindung übertragen werden. Sind dagegen für die Übertragung von Datensignalen zwischen Teilnehmerstellen wie bei dem vorstehend bezeichneten Verfahren mehrere zeitlich aufeinanderfolgende Verbindungen unter Einbeziehung von mit den Datenvermittlungsanlagen verbundenen Signalbehandlungseinrichtungen erforderlich, so ist eine Erfassung des Bestehens der einzelnen Verbindungen in den Datenvermittlungsanlagen nicht ohne weiteres möglich. Denn in den Datenvermittlungsanlagen sind häufig die von den mit ihnen verbundenen Signalbehandlungseinrichtungen aufzubauenden weiterführenden Verbindungen zeitlich nicht erfaßbar.

Im Zusammenhang mit der Übertragung von Datensignalen zwischen mit unterschiedlichen Übertragungsprozeduren arbeitenden Teilnehmerstellen einer Datenvermittlungsanlage ist es bereits bekannt (EP-A 0 088 310), in die Signalübertragung einen mit der Datenvermittlungsanlage verbundenen Signalumsetzer einzubeziehen. Bei Einbeziehung eines solchen Signalumsetzers setzt sich eine Verbindung zwischen den Teilnehmerstellen aus zwei Teilverbindungen zusammen, nämlich aus einer ersten Verbindung zwischen einer mit einer ersten Übertragungsprozedur arbeitenden Teilnehmerstelle und dem Signalumsetzer sowie aus einer zweiten Verbindung zwischen diesem Signalumsetzer und der mit einer zweiten Übertragungsprozedur arbeitenden Teilnehmerstelle. Für die Ermittlung einer Gesamtverbindungsdauer wird die Dauer des Bestehens der ersten Verbindung in der Datenvermittlungsanlage und die Dauer des Bestehens der zweiten Verbindung in dem Signalumsetzer ermittelt. Nach dem Weiterleiten der mit Hilfe des Signalumsetzers umgesetzten Datensignale an die in Frage kommende Teilnehmerstelle werden die in dem Signalumsetzer ermittelten Angaben bezüglich der Dauer des Bestehens der zweiten Verbindung zusammen mit einem die Wiederbelegbarkeit des Signalumsetzers anzeigenden Freimeldesignal zu der Datenvermittlungsanlage übertragen, die aus diesen Angaben und aus den in ihr bereits vorhandenen Angaben eine Gesamtverbindungsdauer ermittelt.

Im Zusammenhang mit der Übertragung von Datensignalen unter Einbeziehung eines zuvor erwähnten Signalumsetzers ist für eine Übertragung von in einer Fernschreib- und Datenvermittlungsanlage bezüglich der Dauer des Bestehens zweier Teilverbindungen ermittelten Angaben zu einer rufenden Teilnehmereinrichtung hin vorgeschlagen worden (EP-A 0 144 583, veröffentlicht am 19.6.1985), daß die rufende Teilnehmereinrichtung ein Steuersignal und ein Zuschreibsignal abgibt, die in der Fernschreib- und Datenvermittlungsanlage gespeichert werden. Nach Ablauf der ersten Teilverbindung werden auf ein gespeichertes Steuersignal hin die Angaben bezüglich der Dauer des Bestehens dieser Teilverbindung zunächst zwischengespeichert. Erst nach dem Abbau der zweiten Teilverbindung werden dann die für die beiden Teilverbindungen ermittelten Angaben unter der Steuerung durch das gespeicherte Zuschreibsignal im Zuge einer gesonderten Verbindung zu der rufenden Teilnehmereinrichtung hin übertragen.

Außerdem ist bereits ein Verfahren zum Übertragen von Datensignalen zwischen Teilnehmerstellen einer Datenvermittlungsanlage vorgeschlagen worden, bei welchem die betreffenden Teilnehmerstellen über eine an der Datenvermittlungsanlage über eine Mehrzahl von Übertragungskanälen angeschlossene Signalbehandlungseinrichtung im Zuge zweier gesonderter Verbindungen Datensignale austauschen (DE-A 3 431 762, veröffentlicht am 26.9.1985). Für die Übertragung von zu behandelnden Datensignalen im Zuge einer ersten, zwischen der Datenvermittlungsanlage und der Signalbehandlungseinrichtung verlaufenden Verbindung wird dabei ein freier Übertragungskanal von der Datenvermittlungsanlage her belegt. Nach der Einspeicherung der zu behandelnden Datensignale wird dann der zunächst belegte Übertragungskanal auf ein von der Signalbehandlungseinrichtung über einen Sonderkanal abgegebenes Freimeldesignal hin von der Datenvermittlungsanlage für eine erneute Belegung wieder freigegeben.

Es ist nun Aufgabe der vorliegenden Erfindung, einen Weg zu zeigen, wie bei einem Verfahren der eingangs genannten Art einerseits die für eine Datensignalübertragung zwischen Teilnehmerstellen der Datenvermittlungsanlage benötigte Zeit ohne Belastung der Vermittlungswege zwischen der Signalbehandlungseinrichtung und der Datenvermittlungsanlage erfaßt und andererseits die Belegungsdauer der Signalbehandlungseinrichtung reduziert werden kann.

Gelöst wird die vorstehend aufgezeigte Aufgabe bei einem Verfahren der eingangs genannten Art gemäß der vorliegenden Erfindung dadurch, daß für die erste Verbindung ein Übertragungskanal einer Mehrzahl von die Signalbehandlungseinrichtung und die Datenvermittlungsanlage miteinander verbindenden Übertragungskanälen benutzt wird, daß nach dem Einspeichern der zu behandelnden Datensignale der zunächst belegte Übertragungskanal auf ein von der Signalbehandlungseinrichtung über einen Sonderkanal abgegebene Freimeldesignal hin von der Datenvermittlungsanlage für eine erneute Belegung wieder freigegeben wird und daß nach dem Abbau der zweiten Verbindung von der Signalbehandlungseinrichtung her über einen gegebenenfalls von dem genannten Sonderkanal verschiedenen Sonderkanal im Zuge einer gesonderten Verbindung Angaben bezüglich der Dauer des Bestehens der zweiten Verbindung zu der Datenvermittlungsanlage hin übertragen werden.

Die Erfindung bringt einerseits den Vorteil mit sich, daß durch die Verwendung wenigstens eines Sonderkanals für die Übertragung der für die einzelnen Übertragungskanäle in der Signalbehandlungseinrichtung ermittelten Angaben und für die Übertragung von Freimeldesignalen eine über die für die Übertragung von zu behandelnden Datensignalen erforderliche Belegung hinausgehende Belegung der einzelnen Übertragungskanäle vermieden wird. Außerdem besteht der Vorteil in der Freigabe eines Übertragungskanals bereits nach der Übernahme von zu behandelnden Datensignalen in die Signalbehandlungseinrichtung. Auf diese Weise steht der betreffende Übertragungskanal vor einer Weiterleitung der gerade über diesen aufgenommenen Datensignale für die Aufnahme weiterer zu behandelnder Datensignale wieder zur Verfügung.

In der Datenvermittlungsanlage kann auch mit einem geringen Steuerungsaufwand eine verkehrsstatistische Erfassung für über die Signalbehandlungseinrichtung verlaufende Verbindungen durchgeführt werden, wenn in der Signalbehandlungseinrichtung zusätzlich Angaben bezüglich des für eine Weiterleitung der behandelten Datensignale von der Signalbehandlungseinrichtung her jeweils veranlaßten Verbindungsaufbaus erfaßt und zusammen mit den Angaben bezüglich der Dauer des Bestehens der jeweils in Frage kommenden Verbindung zu der Datenvermittlungsanlage hin übertragen werden.

Eine weitere vorteilhafte Ausgestaltung der Erfindung besteht darin, daß die Datensignale nach einer Behandlung von der Signalbehandlungseinrichtung her im Zuge einer Mehrzahl von zweiten Verbindungen an eine Mehrzahl von Teilnehmerstellen weitergeleitet werden und daß Angaben bezüglich des Bestehens der zweiten Verbindungen nach deren Abbau zu der Datenvermittlungsanlage hin übertragen werden. Damit kann beispielsweise für eine eine Rundsendeeinrichtung darstellende Signalbehandlungseinrichtung in einfacher Weise in der Datenvermittlungsanlage eine Gesamtverbindungsdauer für die Übertragung von Datensignalen an die einzelnen Teilnehmerstellen ermittelt werden.

Im folgenden wird die Erfindung anhand einer Zeichnung beispielsweise näher beschrieben.

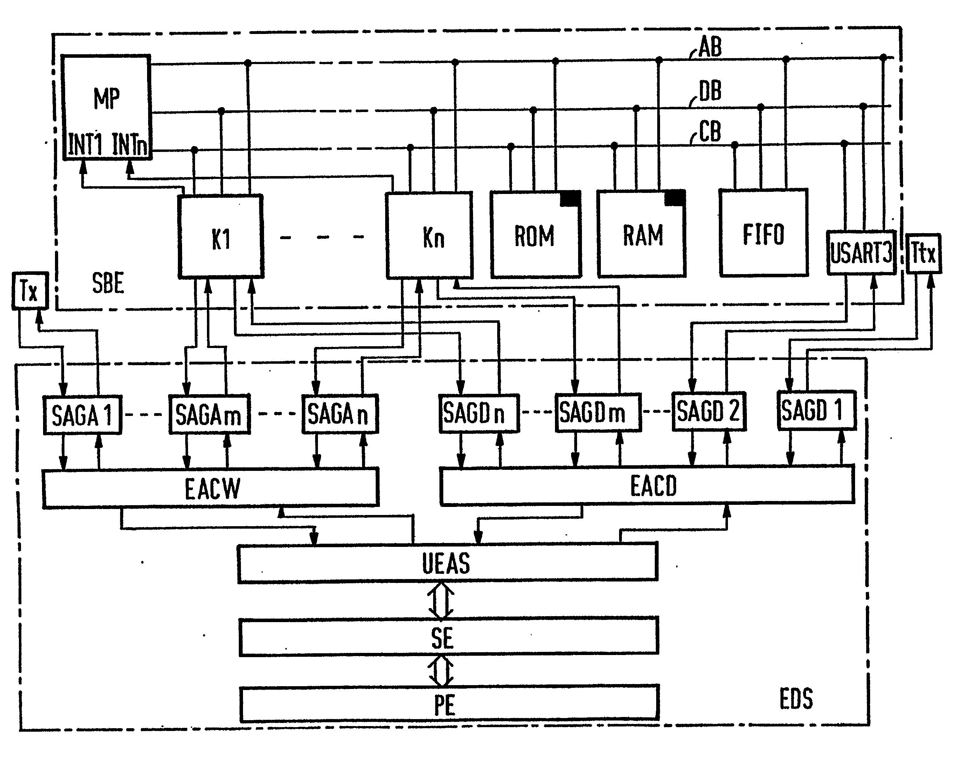

In der Zeichnung ist eine eine Datenvermittlungsanlage EDS und eine mit dieser verbundene Signalbehandlungseinrichtung SBE aufweisende Schaltungsanordnung dargestellt. Der Aufbau dieser Schaltungsanordnung ist bereits im Hauptpatent beschrieben worden, so daß hier auf eine nochmalige detaillierte Beschreibung verzichtet werden kann. Im folgenden werden lediglich die wesentlichsten Bestandteile dieser Schaltungsanordnung zusammenfassend aufgeführt.

Die in der Zeichnung dargestellte Datenvermittlungsanlage EDS dient allgemein zur Übertragung von Datensignalen. Unter diese Datensignale fallen auch beispielsweise Fernschreibsignale oder auch Sprachsignale in digital codierter Form. Um dieses zu verdeutlichen, wird deshalb im folgenden die Datenvermittlungsanlage EDS als Fernschreib- und Datenvermittlungsanlage bezeichnet.

Von dieser Fernschreib- und Datenvermittlungsanlage sind zwei verschiedene Gruppen von Anschlußschaltungen dargestellt. Zu einer ersten Gruppe gehören dabei die Anschlußschaltungen SAGA1 bis SAGAn, von denen in der Zeichnung lediglich die Anschlußschaltungen SAGA1, SAGAm und SAGAn dargestellt sind. Diese Anschlußschaltungen dienen dazu, digitale Datensignale polaritätswechselweise zu verarbeiten. Auf den mit ihnen verbundenen Übertragungsleitungen ist beispielsweise eine Signalübertragung unter Ausnutzung des internationalen Telegrafenalphabets Nr. 2 mit einer für Telexübertragungen üblichen Datenübertragungsrate von 50 Bd möglich. Damit sind beispielsweise an diese Anschlußschaltungen übliche Fernschreib- bzw. Telex-Endgeräte anschließbar. In der Zeichnung ist ein derartiges mit Tx bezeichnetes Telex-Endgerät mit der Anschlußschaltung SAGA1 verbunden.

Die zweite Gruppe von Anschlußschaltungen umfaßt die Anschlußschaltungen SAGD1 bis SAGDn. Von diesen sind in der Zeichnung lediglich die Anschlußschaltungen SAGD1, SAGD2, SAGDm und SAGDn dargestellt. Diese Anschlußschaltungen verarbeiten digitale Datensignale in Form von Bitgruppen, die auch als Envelopes bezeichnet werden. Beispielsweise können sie digitale Datensignale entsprechend dem internationalen Alphabet IA Nr. 5 mit einer Datenübertragungsrate von beispielsweise 2400 bit/s abgeben und aufnehmen. Es handelt sich hierbei um eine synchrone Datenübertragung. An diese Anschlußschaltungen sind beispielsweise sogenannte Bürofernschreibstationen anschließbar, die auch als Teletex-Endgeräte bezeichnet werden. Ein derartiges in der Zeichnung mit Ttx bezeichnetes Teletex-Endgerät ist an der Anschlußschaltung SAGD1 angeschlossen.

Bezüglich der zuvor genannten Anschlußschaltungen sei darauf hingewiesen, daß diese jeweils mit einer Vielzahl von Übertragungsleitungen verbunden sind, an die Telex-Endgeräte bzw. Teletex-Endgeräte anschließbar sind. Die in der Zeichnung mit Tx und Ttx bezeichneten Endgeräte sind demzufolge stellvertretend für eine Vielzahl von Endgeräten angegeben.

Neben den zuvor genannten Anschlußschaltungen sind als Schaltungsteile der Fernschreib-und Datenvermittlungsanlage EDS noch Eingabe-/Ausgabe-Codewandler EACW und EACD, eine Übertragungsablaufsteuerung UEAS, eine Speichereinheit SE und schließlich eine Programmsteuereinheit PE angegeben. Auf das Zusammenwirken dieser Schaltungsteile wird hier nicht näher eingegangen, da dieses bereits hinlänglich bekannt ist (siehe beispielsweise "Siemens-Zeitschrift", Heft 2, 1977, Seiten 82 bis 87).

Mit der Fernschreib- und Datenvermittlungsanlage EDS ist schließlich noch die bereits oben erwähnte Signalbehandlungseinrichtung SBE verbunden. Diese Signalbehandlungseinrichtung dient zur Behandlung von über die Fernschreib- und Datenvermittlungsanlage zu übertragenden Datensignalen. Eine Behandlung von Datensignalen kann dabei beispielsweise in einer Datenübertragungsprozedur- und/oder Datenformatumsetzung, in einer Weiterleitung der Datensignale an eine vorgegebene Anzahl von Teilnehmerstellen oder auch in einer Zwischenspeicherung der Datensignale bis zu deren Abruf durch beispielsweise eine autorisierte Person bestehen. Derartige Signalbehandlungseinrichtungen können auch allgemein als Sende- und Empfangshilfen bezeichnet werden. Als Beispiele für derartige Signalbehandlungseinrichtungen sind bereits im Hauptpatent genannt worden Signalumsetzer, Rundsendeeinrichtungen, welche an eine Mehrzahl von Teilnehmerstellen weiterzuleitende Datensignale zugeführt erhalten, und Einrichtungen für den elektronischen Briefdienst (Mail-Box), in denen von autorisierten Personen abrufbare Nachrichten (Datensignale) zwischengespeichert sind.

Die Signalbehandlungseinrichtung SBE stellt ein Mikroprozessorsystem dar. Zu diesem System gehört ein Mikroprozessor MP, der mit weiteren zu dem System gehörenden Einrichtungen über ein Busleitungssystem verbunden ist. Dieses Busleitungssystem besteht dabei aus einem Adressbus AB, einem Datenbus DB und einem Steuerbus CB. Mit diesem Busleitungssystem ist eine aus einem Festwertspeicher ROM, einem Arbeitsspeicher RAM mit wahlfreiem Zugriff (Schreib-/Lese Speicher) und aus einem Durchlaufspeicher FIFO bestehende Speicheranordnung verbunden.

Außerdem sind mit dem Busleitungssystem der Signalbehandlungseinrichtung SBE Übertragungskanäle K1 bis Kn verbunden. Von diesen sind in der Zeichnung lediglich die Übertragungskanäle K1 und Kn dargestellt. Der interne Aufbau dieser Übertragungskanäle ist zur Vereinfachung der Zeichnung nicht angegeben, er ist identisch mit dem Aufbau der im Hauptpatent gleich bezeichneten Übertragungskanäle. Jeder der Übertragungskanäle ist dabei sowohl mit einer zu der ersten Gruppe von Anschlußschaltungen (SAGA1 bis SAGAn) gehörenden Anschlußschaltung als auch mit einer zu der zweiten Gruppe von Anschlußschaltungen (SAGD1 bis SAGDn) gehörenden Anschlußschaltung verbunden. In der Zeichnung ist der Übertragungskanal K1 an die Anschlußschaltungen SAGAm und SAGDn angeschlossen. Der Übertragungskanal Kn ist dagegen mit den Anschlußschaltungen SAGAn und SAGDm verbunden.

Mit dem Busleitungssystem der Signalbehandlungseinrichtung SBE ist schließlich noch eine Schnittstellenschaltung USART3 verbunden, über die ein Sonderkanal zu der Fernschreib- und Datenvermittlungsanlage EDS hin verläuft. Dieser Sonderkanal verläuft in der Fernschreib- und Datenvermittlungsanlage über die Anschlußschaltung SAGD2.

Nachdem zuvor nochmals der Aufbau der aus dem Hauptpatent bereits bekannten Schaltungsanordnung im Überblick erläutert worden ist, sei nunmehr auf das Verfahren gemäß der vorliegenden Erfindung näher eingegangen. Hierzu sei angenommen, daß die Signalbehandlungseinrichtung SBE eine Umsetzung von ihr zugeführten Teletex-Signalen in Telex-Signale ermöglicht. Sind beispielsweise von dem in der Zeichnung dargestellten Teletex-Endgerät Ttx Datensignale zu dem Telex-Endgerät Tx hin zu übertragen, so wird zunächst zwischen dem genannten Teletex- Endgerät und der Fernschreib- und Datenvermittlungsanlage EDS eine Verbindung aufgebaut, beispielsweise entsprechend der CCITT-Empfehlung X.21. Aus den im Zuge des Verbindungsaufbaus von dem Teletex-Endgerät her übertragenen Wählzeichen geht dabei hervor, daß eine Verbindung zu einem Telex-Endgerät gewünscht ist, d. h. daß eine Umsetzung der Übertragungsprozedur vorzunehmen ist. Derartige Wählzeichen werden in der Fernschreib- und Datenvermittlungsanlage als solche erkannt.

Bei Erkennen von Verbindungswünschen zu der Signalbehandlungseinrichtung SBE hin belegt die Fernschreib- und Datenvermittlungsanlage EDS einen bis dahin freien Übertragungskanal der Signalbehandlungseinrichtung. Nach der Belegung eines solchen Übertragungskanals, beispielsweise des Übertragungskanals K1, wird dann von der Fernschreib- und Datenvermittlungsanlage her eine Verbindung über den belegten Übertragungskanal zu der Signalbehandlungseinrichtung hin aufgebaut. Der Verbindungsaufbau kann dabei beispielsweise gemäß der CCITT-Empfehlung X.71 erfolgen. Nach dem Verbindungsaufbau überträgt die Fernschreib- und Datenvermittlungsanlage die umzusetzenden Datensignale zu der Signalbehandlungseinrichtung hin. Gleichzeitig mit dieser Übertragung ermittelt die Fernschreib- und Datenvermittlungsanlage die Dauer des Bestehens der aufgebauten Verbindung zwischen ihr und der Signalbehandlungseinrichtung. Angaben bezüglich dieser Dauer werden dabei zunächst ggfs. für eine spätere Gebührenermittlung aufgezeichnet.

Für die Aufnahme von umzusetzenden Datensignalen werden den einzelnen Übertragungskanälen der Signalbehandlungseinrichtung Speicherbereiche des bereits oben erwähnten Arbeitsspeichers RAM durch den Mikroprozessor MP der Signalbehandlungseinrichtung zugeordnet. Zusammen mit den umzusetzenden Datensignalen werden dabei u.a.auch von der Fernschreib- und Datenvermittlungsanlage her übertragene Signalisierungsinformationen zwischengespeichert, die eine anschließende Weiterleitung der umgesetzten Datensignale an den in Frage kommenden Empfänger dieser Datensignale ermöglichen. Bei dem hier gewählten Beispiel ist dies das Telex- Endgerät Tx. Die Zuordnung eines solchen Speicherbereiches erfolgt wahlfrei durch den Mikroprozessor. Hierfür kann beispielsweise in dem Arbeitsspeicher ein gesonderter Speicherbereich vorgesehen sein, in dem die aktuelle Zuordnung der einzelnen Speicherbereiche zu den Übertragungskanälen K1 bis Kn festgehalten ist.

Nach dem Einschreiben der über den als Beispiel gewählten Übertragungskanal K1 aufgenommenen Datensignale in den diesem Übertragungskanal zugeteilten Speicherbereich wird die über den Übertragungskanal K1 zu der Fernschreib und Datenvermittlungsanlage hin verlaufende Verbindung in bekannter Weise wieder abgebaut. Bis zu diesem Zeitpunkt wird in der Fernschreib- und Datenvermittlungsanlage die Dauer des Bestehens dieser Verbindung erfaßt. In der Signalbehandlungseinrichtung wird dem Übertragungskanal K1 von diesem Zeitpunkt an ein weiterer nicht durch Datensignale bereits belegter Speicherbereich des Arbeitsspeichers RAM zugeordnet. Dafür wird ein entsprechender Eintrag in den bereits genannten gesonderten Speicherbereich vorgenommen. Nach der Zuordnung eines solchen Speicherbereiches gibt der Mikroprozessor MP dann ein Freimeldesignal für den Übertragungskanal K1 ab. Dieses den Übertragungskanal K1 bezeichnende Freimeldesignal wird dabei zunächst in den Durchlaufspeicher FIFO eingeschrieben. In diesen Durchlaufspeicher werden im übrigen u.a. sämtliche für die Übertragungskanäle K1 bis Kn abgegebenen Freimeldesignale aufgenommen.

Der Durchlaufspeicher FIFO wird von dem Mikroprozessor MP der Signalbehandlungseinrichtung her in vorgegebenen Zeitabständen für die Abgabe jeweils eines zwischengespeicherten Freimeldesignals angesteuert. Die Abgabe erfolgt dabei in der Reihenfolge des Einschreibens dieser Freimeldesignale. Ein bei einer Aussteuerung am Ausgang des Durchlaufspeichers auftretendes Freimeldesignal wird über einen über die Schnittstellenschaltung USART3 zu der Anschlußschaltung SAGD2 der Fernschreib- und Datenvermittlungsanlage hin verlaufenden Sonderkanal übertragen. Auf das Auftreten eines derartigen Freimeldesignals hin wird dann in der Fernschreib- und Datenvermittlungsanlage der bis dahin belegte Übertragungskanal, hier der Übertragungskanal Kl, wieder freigegeben.

Für die Weiterleitung der über den Übertragungskanal K1 übertragenen und in einem diesem zugeteilten Speicherbereich des Arbeitsspeichers gespeicherten Datensignale wird von dem Mikroprozessor MP her eine Verbindung anhand der gespeicherten Empfängerangaben zu dem Empfänger, hier zu dem Telex-Endgerät Tx hin, aufgebaut. Die Übertragung der für diesen Verbindungsaufbau erforderlichen Signalisierungsinformationen erfolgt dabei über die Anschlußschaltungen SAGAm und SAGA1 der Fernschreib- und Datenvermittlungsanlage. Dies kann beispielsweise unter Anwendung üblicher Telex- Signalisierungsprozeduren erfolgen, etwa in der Weise, daß bis zu der Fernschreib- und Datenvermittlungsanlage hin eine Zwischenamtssignalisierung und für den verbleibenden Teil der aufzubauenden Verbindung eine Teilnehmersignalisierung durchgeführt wird. Nach dem Verbindungsaufbau werden dann die in dem Arbeitsspeicher RAM für den Übertragungskanal K1 gespeicherten Datensignale ausgelesen und von dem Mikroprozessor in von Telex-Endgeräten verarbeitbare Datensignale umgesetzt, die über die genannte Verbindung zu dem Telex-Endgerät Tx hin übertragen werden. Nach der vollständigen Übertragung der zwischengespeicherten Datensignale wird die zu dem Telex-Endgerät hin verlaufende Verbindung wieder in bekannter Weise ausgelöst. Nach diesem Auslösen wird dann der Speicherbereich, aus dem die gerade übertragenen Datensignale ausgelesen worden sind, für andere Übertragungskanäle wieder freigegeben. Diese Freigabe wird dabei in dem bereits genannten gesonderten Speicherbereich des Arbeitsspeichers RAM festgehalten.

Mit dem Weiterleiten der Datensignale zu dem für diese in Frage kommenden Empfänger hin, hier zu dem Telex-Endgerät Tx hin, beginnt die Signalbehandlungseinrichtung SBE die Dauer der für das Weiterleiten der Datensignale erforderlichen Zeitspanne zu ermitteln. Zur Markierung des Anfangszeitpunktes der bestehenden Verbindung kann hierzu beispielsweise der Zählerstand einer in der Signalbehandlungseinrichtung vorhandenen periodisch umlaufenden Zählereinrichtung verwendet werden. Um derartige Zählerstände für die einzelnen Übertragungskanäle zwischenspeichern zu können, kann für jeden der Übertragungskanäle eine gesonderte Speicherzelle des Arbeitsspeichers RAM reserviert sein. Mit dem Abschluß des Weiterleitens der behandelten Datensignale ermittelt der Mikroprozessor der Signalbehandlungseinrichtung anhand des aktuellen Zählerstandes und des zwischengespeicherten zugehörigen Anfangszählerstandes die Dauer, die für das Weiterleiten der Datensignale erforderlich gewesen ist. Aus den daraus gewonnenen Angaben bildet der Mikroprozessor MP schließlich ein Meldesignal, welches zunächst in den Durchlaufspeicher FIFO eingetragen wird. Ein solches Meldesignal enthält darüber hinaus auch Angaben bezüglich derjenigen Teilnehmerstelle, von der die weitergeleiteten Datensignale ursprünglich abgegeben worden sind. Dies ist im vorliegenden Fall das Teletex-Endgerät Ttx. Derartige Angaben werden im Zuge des Verbindungsaufbaus zu der Signalbehandlungseinrichtung hin von der Fernschreib- und Datenvermittlungsanlage mit übertragen und zusammen mit den zu behandelnden Datensignalen in dem Arbeitsspeicher RAM der Signalbehandlungseinrichtung zwischengespeichert.

Erkennt der Mikroprozessor MP der Signalbehandlungseinrichtung bei der zyklischen Abfrage des Durchlaufspeichers FIFO ein gerade erwähntes Meldesignal, so baut er über den über die Schnittstellenschaltung USART3 und die Anschlußschaltung SAGD1 verlaufenden Sonderkanal eine Verbindung zu der Fernschreib- und Datenvermittlungsanlage auf. Im Zuge dieser Verbindung werden dann die in dem betreffenden Meldesignal enthaltenen Angaben bezüglich der Zeitdauer und des Senders der übertragenen Datensignale übermittelt. Anhand dieser Angaben und anhand der zuvor in der Fernschreib- und Datenvermittlungsanlage für den gleichen Sender registrierten Angaben ermittelt schließlich die Fernschreib- und Datenvermittlungsanlage eine Gesamtverbindungsdauer und zeichnet die diesbezüglichen Angaben für eine spätere ggfs. in der Fernschreib- und Datenvermittlungsanlage selbst durchzuführende Gebührenermittlung auf.

Vorstehend wurde das Verfahren gemäß der vorliegenden Erfindung am Beispiel einer Signalübertragung von einnem Teletex-Endgerät zu einem Telex-Endgerät hin erläutert. Auch bei einer Signalübertragung in der Gegenrichtung, d. h. bei einer Übertragung von einem Telex Endgerät zu einem Teletex-Endgerät, kann die Dauer des Bestehens der einzelnen Teilverbindungen und die Ermittlung einer Gesamtdauer in der gerade dargestellten Weise erfolgen. Das gleiche gilt auch, wenn es sich bei der Signalbehandlungseinrichtung SBE um eine Rundsendeeinrichtung oder eine Einrichtung für den elektronischen Briefdienst (Mail-Box) handelt.

Lediglich im Falle einer Rundsendeeinrichtung ergeben sich noch einige Besonderheiten. Diese bestehen darin, daß von der Rundsendeeinrichtung die Dauer des Bestehens einer Mehrzahl von Verbindungen ermittelt wird. Die Zahl richtet sich dabei nach der Zahl der Teilnehmerstellen, an die die zwischengespeicherten Datensignale zu übertragen sind. Für diese Ermittlung ist in dem Arbeitsspeicher RAM der Rundsendeeinrichtung auch eine entsprechende Anzahl von Speicherplätzen für jeden der Übertragungskanäle zu reservieren, um die oben angegebenen Anfangszählerstände der einzelnen Verbindungen zwischenzuspeichern.

Die Übertragung der in der Rundsendeeinrichtung bezüglich der Dauer des Bestehens der einzelnen Verbindungen ermittelten Angaben zu der Fernschreib- und Datenvermittlungsanlage hin kann auf unterschiedliche Weise erfolgen. Eine erste Möglichkeit besteht darin, daß die ermittelten Angaben als Einzelangaben gemeinsam im Zuge der oben beschriebenen Verbindung übertragen werden. Es ist aber auch möglich, daß bereits der Mikroprozessor MP der Rundsendeeinrichtung die einzelnen Angaben aufsummiert und ein Summensignal bereitstellt, aus welchem die Gesamtdauer des Bestehens der insgesamt zu berücksichtigenden Verbindungen hervorgeht. Letzteres zeichnet sich dabei dadurch aus, daß über den Sonderkanal nur geringe Datenmengen zu übertragen sind.

Unabhängig davon, um welche Art von Signalbehandlungseinrichtung es sich in einem konkreten Fall handelt, können in der betreffenden Signalbehandlungseinrichtung für eine spätere statistische Auswertung neben den Angaben bezüglich der Dauer des Bestehens von Verbindungen auch Angaben bezüglich des für eine Weiterleitung behandelter Datensignale von der Signalbehandlungseinrichtung her jeweils veranlaßten Verbindungsaufbaus erfaßt werden. Unter diese Angaben fallen beispielsweise Angaben bezüglich der Verweildauer der einzelnen zu behandelnden Datensignale in der Signalbehandlungseinrichtung oder auch Angaben bezüglich der Anzahl der Verbindungsaufbauversuche, die für eine Weiterleitung der zu behandelnden Datensignale erforderlich waren. Diese Angaben werden zusammen mit den Angaben bezüglich der Dauer des Bestehens von Verbindungen zu der Fernschreib- und Datenvermittlungsanlage hin übertragen, wo sie für eine spätere statistische Auswertung erfaßt werden.

Vorstehend wurde unter Bezugnahme auf die Zeichnung erläutert, daß über den die Schnittstellenschaltung USART3 der Signalbehandlungseinrichtung SBE einbeziehenden Sonderkanal sowohl Freimeldesignale als auch Angaben bezüglich der Dauer des Bestehens von Verbindungen zu der Fernschreib- und Datenvermittlungsanlage hin übertragen werden. Mit anderen Worten, dieser Sonderkanal wird im Multiplexbetrieb ausgenutzt. Ist die insgesamt über diesen Sonderkanal zu übertragende Datenmenge so hoch, daß durch eine verzögerte Abarbeitung von Freimeldesignalen die Freigabe von belegten Übertragungskanälen über ein zulässiges Maß hinaus verzögert wird, so ist es vorteilhaft, für die Übertragung von Freimeldesignalen und von Angaben bezüglich der Dauer des Bestehens von Verbindungen unterschiedliche Sonderkanäle zu benutzen. Hierfür sind dann anstelle der einen Schnittstellenschaltung USART3 zwei gesonderte Schnittstellenschaltungen vorzusehen, die in entsprechender Weise mit der Fernschreib- und Datenvermittlungsanlage zu verbinden sind.

Es kann aber auch so vorgegangen sein, daß ein gerade nicht in eine Übertragung von Datensignalen einbezogener Übertragungskanal für die Dauer der Übertragung von Angaben bezüglich der Dauer des Bestehens von Verbindungen als Sonderkanal benutzt wird. Entsprechendes gilt auch für die Übertragung von Freimeldesignalen. Auf diese Weise reduziert sich der schaltungstechnische Aufwand in der Signalbehandlungseinrichtung ohne Erhöhung der Belegungsdauer der in Datensignalübertragungen einbezogenen Übertragungskanäle.

**Patentansprüche**

1. Verfahren zum Übertragen von Datensignalen zwischen Teilnehmerstellen (Tx, Ttx) einer Datenvermittlungsanlage (EDS), die über eine an der Datenvermittlungsanlage angeschlossene Signalbehandlungseinrichtung (SBE) dadurch Datensignale austauschen, daß nach Belegung eines Übertragungskanals der Signalbehandlungseinrichtung durch die Datenvermittlungsanlage während einer zwischen einer der Teilnehmerstellen (z.B. Tx) und der Signalbehandlungseinrichtung aufgebauten ersten Verbindung die zu behandelnden Datensignale in die Signalbehandlungseinrichtung eingespeichert werden und daß anschließend die eingespeicherten Datensignale nach einer entsprechenden Behandlung im Zuge einer zweiten Verbindung über die Datenvermittlungsanlage an eine weitere Teilnehmerstelle (Ttx) weitergeleitet werden, wobei die Dauer des Bestehens der ersten Verbindung in der Datenvermittlungsanlage, die Dauer des Bestehens der zweiten Verbindung dagegen in der Signalbehandlungseinrichtung ermittelt wird und nach dem Abbau der zweiten Verbindung von der Signalbehandlungseinrichtung her Angaben bezüglich der Dauer des Bestehens der zweiten Verbindung zu der Datenvermittlungsanlage hin übertragen werden, in welcher aus diesen Angaben und den dort bereits vorliegenden Angaben eine Gesamtverbindungsdauer ermittelt wird, und wobei der Übertragungskanal auf ein von der Signalbehandlungseinrichtung abgegebenes Freimeldesignal hin von der Datenvermittlungsanlage für eine erneute Belegung wieder freigegeben wird, dadurch gekennzeichnet, daß für die erste Verbindung ein Übertragungskanal (z.B. Kl) einer Mehrzahl von die Signalbehandlungseinrichtung (SBE) und die Datenvermittlungsanlage (EDS) miteinander verbindenden Übertragungskanälen (Kl bis Kn) benutzt wird, daß nach dem Einspeichern der zu behandelnden Datensignale der zunächst belegte Übertragungskanal auf ein von der Signalbehandlungseinrichtung über einen Sonderkanal (USART3) abgegebenes Freimeldesignal hin von der Datenvermittlungsanlage für eine erneute Belegung wieder freigegeben wird und daß nach dem Abbau der zweiten Verbindung von der Signalbehandlungseinrichtung her über einen gegebenenfalls von dem genannten Sonderkanal verschiedenen Sonderkanal im Zuge einer gesonderten Verbindung Angaben bezüglich der Dauer des Bestehens der zweiten Verbindung zu der Datenvermittlungsanlage hin übertragen werden.

2. Verfahren nach Anspruch 1, dadurch gekennzeichnet, daß in der Signalbehandlungseinrichtung (SBE) zusätzlich Angaben bezüglich des für eine Weiterleitung der behandelten Datensignale von der Signalbehandlungseinrichtung her jeweils veranlaßten Verbindungsaufbaus für eine statistische Auswertung erfaßt und zusammen mit den Angaben bezüglich der Dauer des Bestehens der jeweils in Frage kommenden Verbindung zu der Datenvermittlungsanlage (EDS) hin übertragen werden.

3. Verfahren nach Anspruch 1 oder 2, dadurch gekennzeichnet, daß die Datensignale nach einer Behandlung von der Signalbehandlungseinrichtung (SBE) her im Zuge einer Mehrzahl von zweiten Verbindungen an eine Mehrzahl von Teilnehmerstellen weitergeleitet werden und daß Angaben bezüglich des Bestehens der zweiten Verbindungen nach deren Abbau zu der Datenvermittlungsanlage (EDS) hin übertragen werden.

## Claims

1. Method for transmitting data signals between subscriber stations (Tx, Ttx) of a data exchange (EDS), which interchange data signals via a signal processing device (SBE) connected to the data exchange by storing, after seizure of a transmission channel of the signal processing device by the data exchange during a first call set up between one of the subscriber stations (for example Tx) and the signal processing device, the data signals to be processed in the signal processing device and subsequently forwarding the stored data signals, after appropriate processing, to a further subscriber station (Ttx) via the data exchange during a second call, in which connection the duration of the existence of the first call is determined in the data exchange but the duration of the existence of the second call is determined in the signal processing device and, after the second call has been cleared, information with respect to the duration of the existence of the second call is transmitted from the signal processing device to the data exchange in which a total call duration is determined from this information and the information already existing there, and in which the transmission channel is released again by the data exchange for reallocation following a clear signal output by the signal processing device, characterized in that for the first call, a transmission channel (for example Kl) of a plurality of transmission channels (Kl to Kn) connecting the data exchange (EDS) with the signal processing device (SBE) is used, in that, after the storing of the data signals to be processed, the transmission channel initially occupied is released again by the data exchange for reallocation following a clear signal output by a special channel (USART3) by the signal processing device, and in that, after the second call has been cleared, information with respect to the duration of the existence of the second call is transmitted to the data exchange by the signal processing device via a special channel, which may be different from the said special channel, during a separate call.

2. Method according to Claim 1, characterized in that information with respect to the call set-up in each case initiated from the signal processing device for forwarding the processed data signals is additionally registered in the signal processing device (SBE) for a statistical analysis and transmitted, together with the information with respect to the duration of the existence of the call considered in each case, to the data exchange (EDS).

3. Method according to Claim 1 or 2, characterized in that the data signals, after being processed by the signal processing device (SBE), are forwarded to a plurality of subscriber stations during a plurality of second calls and in that information with respect to the existence of the second calls is transmitted towards the data exchange (EDS) after these have been cleared.

## Revendications

1. Procédé pour transmettre des signaux de données entre des postes d'abonnés (Tx, Ttx) d'une installation de commutation de données (EDS), qui échangent des signaux de données par l'intermédiaire d'un dispositif (SBE) de traitement de signaux raccordé à une installation de commutation de données, par le fait qu'après l'occupation d'un canal de transmission du dispositif de traitement (SBE) des signaux par l'installation de commutation de données pendant une première liaison établie entre l'un des postes d'abonnés (par exemple Tx) et le dispositif de traitement des signaux, les signaux de données devant être traités sont mémorisés dans le dispositif de traitement de signaux et qu'ensuite, les signaux de données mémorisés sont retransmis, après un traitement correspondant, au cours d'une seconde liaison, par l'intermédiaire de l'installation de commutation de données, à un autre poste d'abonnés (Ttx), et selon lequel la durée de l'existence de la première liaison est déterminée dans l'installation de commutation de données, alors que la durée d'existence de la seconde liaison est par contre déterminée dans le dispositif de traitement des signaux et qu'après la suppression de la seconde liaison, des indications concernant la durée de l'existence de la seconde liaison sont transmises depuis le dispositif de traitement des signaux en direction de l'installation de commutation de données, dans laquelle une durée totale de liaison est déterminée à partir de ces indications et à partir des indications déjà présentes dans cette installation, et selon lequel, lors de l'apparition d'un signal de signalisation d'état libre, délivré par le dispositif de traitement des signaux, le canal de transmission est à nouveau libéré par l'installation de commutation de données pour une nouvelle occupation, caractérisé par le fait que pour la première liaison, on utilise un canal de transmission (par exemple KI) d'une multiplicité de canaux de transmission (KI à Kn) reliant entre eux le dispositif (SBE) de traitement des signaux à une installation de commutation de données (EDS), qu'après la mémorisation des signaux de données devant être traités, lors de l'apparition d'un signal de signalisation d'état libre délivré par le dispositif de traitement des signaux par l'intermédiaire d'un canal particulier (USART3), le canal de transmission occupé en premier est à nouveau autorisé par l'installation de commutation donnée pour une nouvelle occupation, et qu'après la suppression de la seconde liaison, les indications concernant la durée de l'existence de la seconde liaison sont transmises à l'installation de commutation de données à partir du dispositif de traitement des signaux, par l'intermédiaire d'un canal particulier, éventuellement différent dudit canal particulier, au cours d'une liaison particulière.

2. Procédé selon la revendication 1, caractérisé par le fait que, dans le dispositif (SBE) de traitement des signaux, des indications concernant l'établissement de la liaison, déclenchée pour une retransmission des signaux de données traités à partir du dispositif de traitement des signaux, sont détectées, de plus pour une évaluation statistique et sont transmises, conjointement avec les indications concernant la durée de l'existence de la liaison respectivement considérée, à l'installation de commutation de données (EDS).

3. Procédé suivant la revendication 1 ou 2, caractérisé par le fait qu'après un traitement, les signaux de données sont retransmis à partir du dispositif (SBE) de traitement des signaux, au cours d'une multiplicité de secondes liaisons, à une multiplicité de postes d'abonnés, et que des indications concernant l'existence des secondes liaisons sont transmises, après leur suppression, à l'installation de commutation de données (EDS).